# EUROPEAN PATENT APPLICATION

(11) **EP 2 910 883 A1**
(43) Date of publication of application: **26.08.2015**
(21) Application number: 14461608.3
(22) Date of filing: 29.12.2014
(51) Int. Cl.: F26B 23/00, D06F 58/20

(54) **DRYING MACHINE FOR DRYING OF WET OBJECTS WITH CIRCULATION OF DRYING MEDIUM AND METHOD FOR LEADING DRYING MEDIUM IN DRYING MACHINE FOR DRYING OF WET OBJECTS**

(30) Priority: 03.02.2014 PL 40706514; 23.12.2014 PL 41062914
(71) Applicant: Kordecka, Wieslawa, 55-120 Oborniki Slaskie (PL)
(72) Inventor: Kordecki, Piotr, 55-120 Oborniki Slaskie (PL); Kordecki, Zdzislaw, 55-120 Oborniki Slaskie (PL)
(74) Representative: Hudy, Ludwik

(57) **Abstract**

In a dryer or a drying machine with a closed circulation or an incompletely closed circulation of a drying medium or agent for drying wet objects or articles, comprising a drying chamber with the wet objects placed therein, a fan forcing the circulation of the drying agent and a heat pump with an evaporator and a condenser with a chamber connected via a flow line with the drying chamber, in the closed circulation or incompletely closed circulation of the drying agent there is a heat exchanger (20) with a cooling chamber (21) and a heating chamber (25), drawing thermal energy from the cooling chamber (21) whose inlet (22) is connected with an outlet (13) of the drying chamber (11), and an inlet (23) is connected with a supply connection pipe (46) of the chamber (45) of the evaporator (40) of the heat pump (30) whereby an outlet connection pipe (47) of the chamber (45) of the evaporator (40) is connected with the heating chamber (25) of the heat exchanger (20) whose outlet (27) is connected with an inlet (56) of the chamber (55) of the condenser (50) of the heat pump (30).

## Description

The object of the invention is a dryer or a drying machine for drying of wet objects, especially with a closed circulation or an incompletely closed circulation of a drying medium or agent, according to the preamble of claim 1, and a method for conducting or leading drying medium in the drying machine for drying the wet objects or articles, starting with, for example, agricultural or farm products through textile products up to minerals and bulk materials as well as ceramic products according to the preamble of claim 5.

When drying wet objects or articles in dryers with the closed circulation or the incompletely closed circulation of the drying medium, the drying medium or agent having a proper temperature and in a state distant as much from a liquid-steam phase transformation curve should be supplied to a drying chamber so that water contained in the wet articles evaporates, afterwards the drying agent should be removed from the drying chamber.

From the publication JP 2011250849 A of the patent application description a cloth drying apparatus is known, in which a coolant is circulated through a compressor, a condenser, pressure reduction means and an evaporator. There is an auxiliary heat exchanger and a multi-way valve located between the condenser and the evaporator in an airflow channel or duct of the drying air. By switching over the multi-way valve, the auxiliary heat exchanger operates at one drying stage as the evaporator, and at the next drying stage, it operates as the condenser to reduce the temperature and to dry the drying gas.

From the Polish patent description PL 176057 a tumble laundry dryer is known which comprises a rotating drum having a drying chamber made of solid metal sheet and externally placed on rolling elements. In an upper part of a rear wall constituting a drum closure there is an inlet of hot air, whereas, a side of a front wall of a drum mantle is closed with a bottom plug with a redrawing embedded on a sliding ring. The air outlet channel goes through the dry air inlet forming a heat exchanger.

From the U.S. patent description no. US 6745495 a dryer tumble for drying articles is known that comprises a drum having a cavity configured to hold articles to be dried, a first motor drivingly coupled to the drum to rotate the drum, a heat source in flow communication with the cavity and a variable speed motor coupled to a blower positioned to deliver heated air from the heat source to the cavity.

From the U.S. patent description no. US 4549362 an industrial dryer for drying fabrics is known which is provided with an air recirculating-mixing system whereby the device comprises a control unit that controls the system of valves allowing recirculation of warm air of a various percentage content inside the drum.

From the European patent description no. EP 2260138 a dryer for clothes is known. The dryer has a rotatably embedded dryer drum to receive clothes to be dried with a driving motor for rotatable driving the dryer drum wherein the driving motor is a single-phase or multi-phase electric motor and wherein to control the electric motor a frequency converter has been anticipated that comprises a power controller for the single-phase or multi-phase electric motor and a measuring device to measure phase currents and/or phase voltages.

There is one known from the use of a dryer for clothes with a heat pump built out and comprising a condenser and an evaporator. The dryer has also a drying chamber connected through a dry air duct with the heat pump condenser and through a wet air duct with the heat pump evaporator as well as a fan that forces recirculation of a process air. The process air is forced by the fan to circulate in a closed system. The dried and heated process air in the heat pump condenser is conducted to the drying chamber, and from the drying chamber the moistened process air is conducted to the heat pump evaporator in which water is dripped from it.

The objective of this invention is to create a method for conducting or leading drying medium or agent in a drying machine for drying wet objects or articles and a dryer or drying machine, especially with a closed circulation or an incompletely closed circulation of a drying medium or agent, for drying wet articles, starting with, exemplarily, agricultural or farm products, through textile products, up to minerals and bulk products as well as ceramic products.

In the case of a dryer according to the invention, this objective has been achieved by the features of claim 1, and in the case of a method the objective has been achieved by the features of claim 5.

According to an idea of this invention, in a dryer or a drying machine with a closed circulation or an incompletely closed circulation of a drying medium or agent for drying wet objects or articles comprising a drying chamber with the wet objects or articles located therein, a fan forcing the circulation of the drying medium or agent and a heat pump with an evaporator and a condenser comprising a chamber connected via a flow line with the drying chamber, in the closed or the incompletely closed circulation of the drying medium or agent there is a heat exchanger with a cooling chamber and a heating chamber drawing thermal energy from the cooling chamber whose inlet is connected with an outlet of the drying chamber, and an outlet is connected with a supply connection pipe of the chamber of the heat pump evaporator whereby an outlet connection pipe of the evaporator chamber is connected with the heating chamber of the heat exchanger whose outlet is connected with an inlet of a chamber of a condenser of the heat pump.

It is recommended that the heat exchanger is a counterflow heat exchanger with an intermediate chamber with a rotating rotor with through ducts located in parallel to an axis of rotation of the rotating rotor, transmitting the thermal energy from a stream of the hot wet drying medium or agent flowing through the cooling chamber of the heat exchanger to a stream of the cooled dried drying medium or agent flowing through the heating chamber of the heat exchanger.

The heat exchanger can be a counterflow heat exchanger with parallel or crossed or obliquely relative to each other flow ducts of the drying medium or agent. Moreover, these can be heat exchangers with heat tubes or heat exchangers with an intermediary medium or agent.

In one embodiment, the drying chamber can be a rotatable drying chamber or a chamber with a drying tape.

According to a further idea of the present invention, in a method for conducting or leading a drying medium or agent in a drying machine with a closed circulation or an incompletely closed circulation of the drying medium or agent for drying wet objects or articles comprising a drying chamber, a fan and a heat pump inter-connected via flow lines of the drying medium or agent, creating with the drying chamber, the fan forcing the circulation of the drying agent and the heat pump comprising an evaporator with a chamber and a condenser with a chamber, the closed circulation of the drying medium, in the closed circulation or the incompletely closed circulation of the drying medium or agent a heat exchanger with a cooling chamber and a heating chamber is connected, and the drying medium from the drying chamber is directed to the cooling chamber of the heat exchanger wherefrom, after an initial drying and cooling, the drying medium is directed to the evaporator chamber, and afterwards to the heating chamber, and after preheating of the drying medium in the heating chamber drawing thermal energy from the cooling chamber, the drying medium or agent is introduced into the chamber of the heat pump condenser wherefrom the dried and hot drying medium is fed to the drying chamber.

The drying medium in the heating chamber of the heat exchanger can be conducted or leaded in the direction opposite to that of the flow of the drying medium in the cooling chamber of the heat exchanger.

Preferably, the thermal energy transfer from the cooling chamber to the heating chamber is accomplished by rotating rotors that cumulate the thermal energy in a part of the rotor that is located in the cooling chamber, and afterwards, through rotation and entering into the heating chamber, giving up heat to the drying medium flowing through this part of rotor.

Preferably, the flow of the drying medium or agent through the rotors in the heating chamber, in relation to the flow of the drying medium or agent in the cooling chamber, is a counterflow.

The use of an additional heat exchanger allows a heat recuperation in the system between the warm and wet drying medium or agent leaving the drying chamber and the cool and dry drying medium being conducted or leaded through said heat exchanger. The solution according to the invention reduces an energy consumption of the drying process, and besides, it makes possible a reduction of the drying time and the running of the drying process at a lower temperature.

The invention has been presented in the embodiment in drawings in which Figs. 1 and 2 schematically show a dryer or a drying machine with a circulation of a drying medium or agent for drying wet objects or articles, Figs. 3 and 4 show a counterflow recuperator with ducts of the drying medium or agent of a cooling chamber and a heating chamber which are positioned in parallel at least over specific sections, Fig. 5 shows a dryer or drying machine with a rotatable drying chamber, and Fig. 6 show a dryer or drying machine with the rotatable drying chamber in another embodiment.

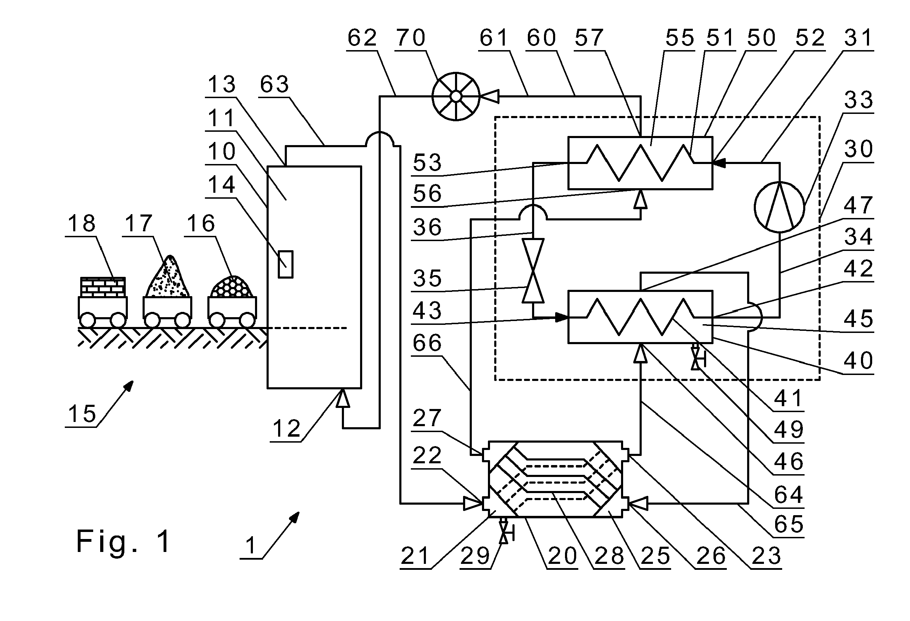

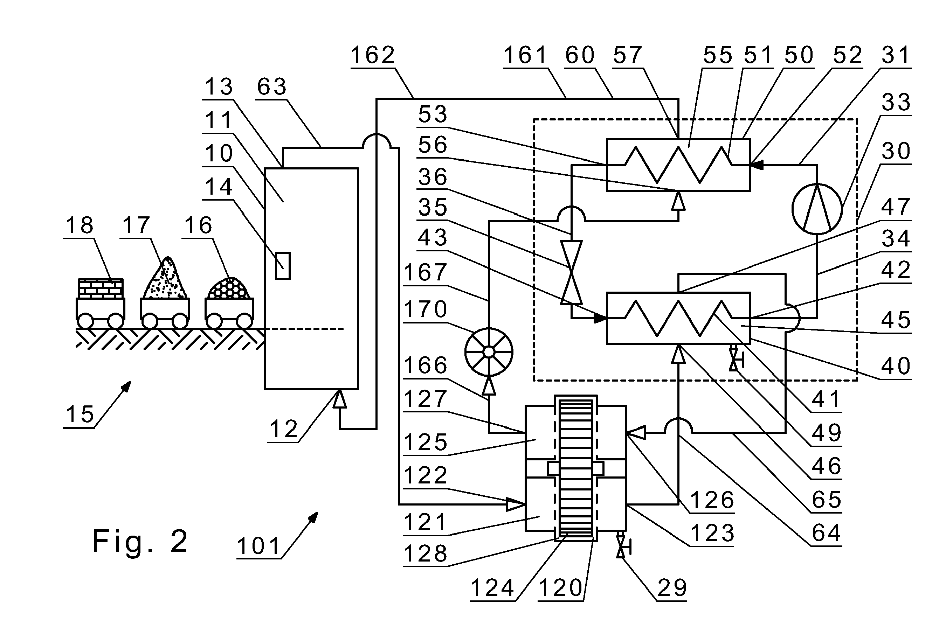

A dryer or a drying machine 1, 101 with a closed circulation 60 or an incompletely closed circulation of a drying medium or agent for drying wet objects 15 or articles, shown schematically in Figs. 1 and 2, comprises a drying unit 10 having a drying chamber 11, a heat pump 30 with an internal circulation 31 of a working medium, a heat exchanger 20, 120 and a fan 70, 170 located in an external circulation of the heat pump, being the incompletely closed circulation when a valve or a gate valve 14 is set in a position in which to the drying chamber 11 air or a drying agent is supplied from outside, for example, through air leaks or an open valve, or being the closed circulation 60 of the drying agent when the system is hermetic, and neither air nor drying agent is supplied from the outside. According to the invention, the drying medium can be air or inert gas, for example, carbon dioxide, nitrogen, combustion gas or their mixtures. The flow direction of the drying medium in ducts or flow lines is marked in all figures by a white arrow.

Connected with the drying chamber of the drying unit 10 shown in Fig. 1, in which wet articles 15, exemplarily, fruits, vegetables, agricultural or farm products 16, textile products, minerals, bulk products 17, ceramic product 18, through an inlet 12 is the fan 70 using a second section of a duct or a supply flow line 62 of the circulation 60 of the drying agent. The drying chamber 11, through an outlet 13 using a third section of the duct or an outlet flow line 63 of the circulation 60, is connected with an inlet 22 of a cooling chamber 21 of a preliminary cooling circulation of a wet drying agent flowing through the heat exchanger 20. The cooling chamber 21 of the preliminary cooling circulation of the wet drying agent has an outlet 23 with which a supply connection pipe 46 of a chamber 45 of an evaporator 40 with a cooling coil 41 is connected using a fourth section of the duct or a fourth flow line 64 of the external heat circulation of the heat pump 30 that makes part of the circulation 60 of the drying agent. The chamber 45 of the evaporator 40 has an outlet connection pipe 47 with which, using a fifth section of the duct or a second flow line 65 of the external heat circulation of the heat pump 30 is connected an inlet 26 of a heating chamber 25 of the preliminary heating circulation of the dried drying agent flowing through the heat exchanger 20. Besides, the chamber 45 of the evaporator 40 has a valve 49 allowing to take off water collected in the chamber 45 of the evaporator 40 and dropped it out from a stream of a hot wet drying agent.

The heat exchanger 20 of the dryer 1, from the embodiment as presented in Fig. 1, is a counterflow recuperator whose ducts of the drying agent are positioned in parallel at least over specific sections whereby the stream of the hot wet drying agent is directed in the opposite direction to a flow of a stream of a cool dried drying agent. The duct of the hot wet drying agent creates the cooling chamber 21 of the preliminary cooling circulation of the drying agent flowing through the heat exchanger 20, and the duct of the cool dried drying agent creates the heating chamber 25 of the preliminary heating circulation of the dried drying agent flowing through the heat exchanger 20. The cooling chamber 21 and the heating chamber 25 of the heat exchanger 20 have a common wall or common walls creating a partition 28 owing to which there occurs a heat exchange between the stream of the hot wet drying agent and the stream of the cool dried drying agent. The size of the partition 28 can be adjusted not only through its length but also through the number of cooling chambers and that of heating chambers, located alternately in a housing. In addition, the heat exchanger 20 has a valve 29 allowing to take off water collecting in the cooling chamber 21 after condensation of steam of the stream of the hot wet drying agent.

The heat pump 30 with the internal circulation 31 of the working agent, beside said evaporator 40, comprises a condenser 50 having a heating coil 51 and a chamber 55 of the condenser with an inlet 56 and an outlet 57 of the drying agent. Connected with the inlet 56 of the chamber 55 of the condenser 50 using a sixth section of the duct or a final flow line 66 of the external heat circulation of the heat pump 30 is an outlet 27 of the heating chamber 25 of the preliminary heating circulation of the dried drying agent flowing through the heat exchanger 20. Located in the internal circulation 31 of the heat pump 30 in a flow line 34 of the working agent connecting a supply connection line 42 of the cooling coil 41 with a supply connection line 52 of the heating coil 51 of the condenser 50 is a compressor 33 where the working agent is compressed, which involves an abrupt rise of its temperature. Besides, located in the internal circulation 31 of the heat pump 30 in a next flow line 36 of the working agent connecting an outlet connection line 53 of the heating coil 51 of the condenser 50 with an inlet connection line 43 of the cooling coil 41 of the evaporator 40 is an expansion valve 35 or a capillary tube, or an expansion turbine in which the working agent is throttled from the condensation pressure to the pressure that is in the evaporator 40. According to the invention, the working medium or agent can be freon, ammonia, carbon dioxide or another thermodynamic agent that has properties allowing it to boil at a low temperature, exemplarily at 0°C. The circulation direction of the working medium or agent in ducts or flow lines has been marked in all figures with a black arrow.

Heat collected from the working agent present in the heating coil 51 of the condenser 50 is transmitted to the drying medium present in the chamber 55 of the condenser 50, which through the outlet 57 and a first section of the duct or a flow line 61, as the dried and heated drying medium, is supplied to the fan 70 forcing the flow of the drying medium in the closed thermodynamic circulation.

The dryer 101 with the circulation 60 of the drying medium for drying wet articles from Fig. 2 is constructed like the dryer 1 shown schematically in Fig. 1. The difference between both embodiments consists in the fan 70 of the dryer 1 of Fig. 1 being located in the supply flow line 62 connecting the drying chamber 11 with the chamber 55 of the condenser 50, on the other hand, the fan 170 of the dryer 101 of Fig. 2 being placed in the flow way of the drying medium in supply flow lines 166, 167 connecting an outlet 127 of a heating chamber 125 of the preliminary heating circulation of the drying medium and the inlet 56 of said chamber 55 of the condenser 50, and the drying chamber 11 with the chamber 55 of the condenser 50 is being connected with flow lines 161, 162. Connected with the drying chamber 11, through the outlet 13, using the third section of the duct or the outlet flow line 63 of the circulation 60 of the drying agent is an inlet 122 of a cooling chamber 121 of the preliminary cooling circulation of the wet drying agent flowing through a heat exchanger 120. The cooling chamber 121 of the preliminary cooling circulation of the wet drying agent has an outlet 123 with which the supply connection pipe 46 of the chamber 45 of the evaporator 40 with the cooling coil 41 using the fourth section of the duct or the fourth flow line 64 of the external heat circulation of the heat pump 30 that makes part of the circulation 60 of the drying agent is connected. The chamber 45 of the evaporator 40 has the outlet connection pipe 47 with which, using the fifth section of the duct or the second flow line 65 of the external heat circulation of the heat pump 30, an inlet 126 of the heating chamber 125 of the preliminary heating circulation of the dried drying agent flowing through the heat exchanger 120 is connected.

The next difference between both embodiments appears in the structure of the heat exchanger. The heat exchanger 120 of the dryer 101 from Fig. 2 is a counterflow rotatable regenerator, which has a top duct of the cool dried drying agent creating the heating chamber 125 of the heat exchanger 120 and a bottom duct of the hot wet drying agent creating the cooling chamber 121. The cooling chamber 121 of the preliminary cooling circulation of the wet drying agent flowing through the heat exchanger 120 and the heating chamber 125 of the preliminary heating circulation of the drying agent flowing through the heat exchanger 120 is separated with an intermediate chamber 128 with a rotating rotor 124 with ducts or throughholes positioned in parallel to an axis of rotation of the rotating rotor 124. In the position as in Fig. 2, a bottom part of the rotating rotor 124 draws thermal energy and partially drips off water from the drying agent in the bottom duct, while becoming warm itself. At the moment when the heated part of the rotating rotor 124 lies at the top after the rotation of the rotating rotor 124 by the angle of 180°, the thermal energy contained in the heated part of the rotating rotor 124 will be transmitted to mass of the drying agent moving through the heating chamber 125 of the preliminary heating circulation of the dried drying agent. In the top duct the flowing drying agent cools down the rotating rotor 124. At the rotation of the rotating rotor 124 in the intermediate chamber 128 continuous heat exchange occurs between the stream of the hot wet drying agent and the stream of the cool dried drying agent.

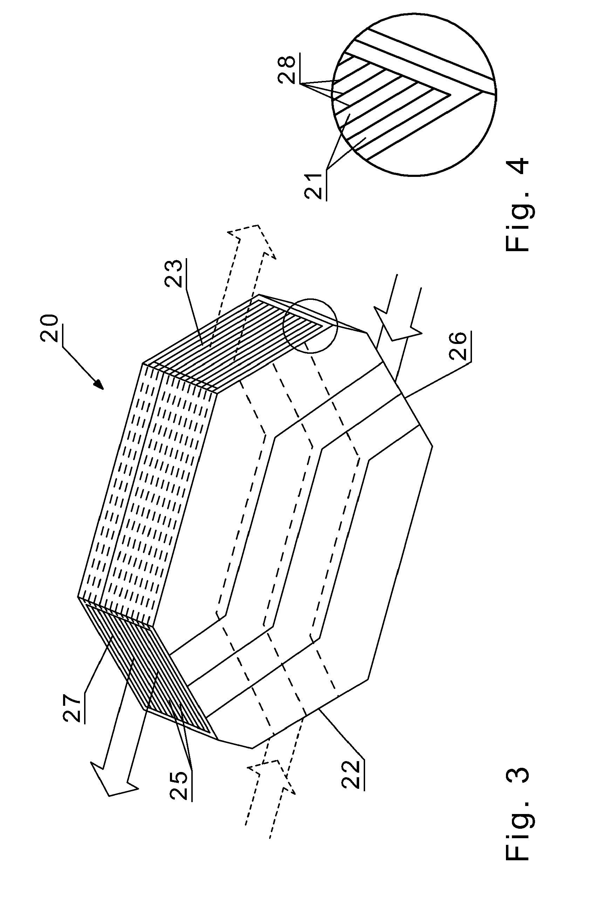

Figs. 3 and 4 present the embodiment of the heat exchanger 20 that is the counterflow recuperator with ducts of the drying agent of the cooling chamber 21 and the heating chamber 25 positioned in parallel at least over specific sections. In this heat exchanger the stream of the hot wet drying agent is directed in the opposite direction to the stream of the cool dried drying agent. The cooling chamber 21 with the inlet 22 and the outlet 23 and the heating chamber 25 with the inlet 26 and the outlet 27 of the heat exchanger 20 have common walls creating the partition 28 owing to which the heat exchange occurs between the stream of the hot wet drying agent and the stream of the cool dried drying agent. While increasing the number of cooling chambers and heating chambers, located alternately in the housing, the intensity of the thermal energy exchange between the stream of the hot wet drying agent and the stream of the cool dried drying agent can be increased.

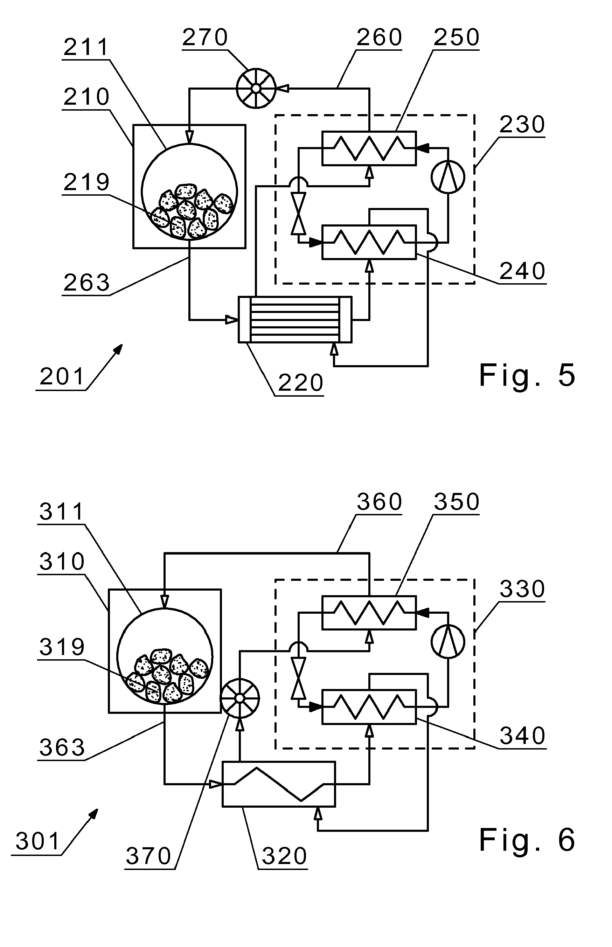

A dryer 201 shown in Fig. 5 with a rotatable drying chamber 211 located in a housing 210, and designated, exemplarily, for clothes 219, vegetables, fruits and farm products comprises a heat pump 230 with a condenser 250 and an evaporator 240, the drying chamber 211 connected with a duct 260 of a dry drying medium with the condenser 250 of the heat pump and a duct 263 of a wet drying medium with the evaporator 240 of the heat pump 230, a fan 270 forcing a circulation of the drying medium and a heat exchanger 220. The fan 270 is built into the dry air duct 260. A first circulation of the heat exchanger 220 is located in the duct 263 of the wet drying agent. An inlet of a second circulation of the heat exchanger 220 is connected with the evaporator 240 of the heat pump 230 and an outlet with the condenser 250 of the heat pump 230. The heat exchanger 220 constitutes a counterflow heat exchanger. Principally, in clothes dryers and washers-dryers designated for household use the drying chamber 211 constitutes a drum for clothes. Embedding or built in the fan 270 into the duct 263 of the dry drying medium constitutes one of the possible, advantageous places of its location in the circulation system of the drying medium. The counterflow heat exchanger applied constitutes an advantageous type of the heat exchanger 220 and does not limit in the embodiment of the present invention, other types of the heat exchangers 220.

A dryer 301 shown in Fig. 6 with a rotatable drying chamber 311 located in a housing 310, designated, exemplarily, for clothes 319, vegetables, fruits and farm products is constructed as in the previous embodiment, with this difference that a fan 370 is placed in a flow way of a drying medium between a heat exchanger 320 and a condenser 350 of a heat pump 330 and any, adapted to the whole of the system, not necessarily a counterflow heat exchanger 320 is used.

In a method of conducting or leading a drying medium or agent in a dryer for drying wet objects or articles a flow of the drying medium is forced in a closed circulation or an incompletely closed circulation wherein the dry and heated drying medium is fed to a drying chamber from which, after moistening, the wet drying medium is directed to a cooling chamber of a heat exchanger and, after a preliminary cooling and partial water dripping-off, is fed to an evaporator chamber creating a preliminary circulation of the wet drying medium. After a further cooling of the wet drying medium and a further water dripping-off, the dry and cooled drying medium is conducted to the heating chamber of the heat exchanger in which the heating process of the drying medium is initiated. From the heating chamber of the heat exchanger the pre-heated drying medium is directed to the condenser chamber in which the drying medium continues to be heated. After the heating of the drying medium in the condenser chamber, the dry and heated drying medium is fed to the drying chamber, thus the circulation of the drying medium is the closed circulation.

In the embodiment shown in Fig. 2, thermal energy from the cooling chamber is transmitted to the heating chamber using rotating rotors drawing thermal energy from the drying medium in the part of the rotor located in the cooling chamber, and afterwards, through rotation and entering into the heating chamber of the rotating rotors, giving up thermal energy to the drying medium flowing through the rotor.

The method of conducting or leading the drying medium in the drying machine with the rotatable drying chamber consists in the dry and heated drying agent being conducted via ducts 260, 360 of the dry drying medium from the condenser 250, 350 of the heat pump 230, 330 to the drying chamber 211, 311, and from the drying chamber 211, 311 the moistened drying medium is conducted through ducts 263, 363 of the wet drying medium to the evaporator 240, 340 of the heat pump 230, 330. Before entering into the evaporator 240, 340 of the heat pump 230, 330, conducted through the duct 263, 363, the moistened drying medium is conducted through the heat exchanger 220, 320 in the second circulation of which the drying medium is introduced from the evaporator 240, 340 of the heat pump 230, 330, which, further on, upon passing the heat exchanger 220, 320, is conducted to the condenser 250, 350 of the heat pump 230, 330. The circulation of the drying medium is forced by the fan 270, 370 situated in the duct 260, 360 of the dry drying medium, as in the embodiment presented in Fig. 5 or as in another embodiment presented in Fig. 6, on the flow way of the drying medium between the heat exchanger 320 and the condenser 350. In the method according to the invention, the moistened and warm drying medium flowing out from the drying chamber 211,311 is preliminarily cooled while partially dripping off water in the heat exchanger 220, 320, afterwards it flows through the evaporator 240, 340 of the heat pump 230, 330 in which it gets cooled and water is dripped-off from it. The drying medium dried in the evaporator 240, 340 of the heat pump 230, 330 returns to the heat exchanger 220, 320 in which, through recuperation, it is heated and afterwards, it flows to the condenser 250, 350 of the heat pump from which, after heating, it flows to the drying chamber 211, 311. Preferably, in the heat exchanger 220, 320, the drying medium dried in the evaporator 240, 340 of the heat pump 230, 330 is conducted in the direction opposite to that of the moistened drying medium introduced to that heat exchanger originating from the drying chamber 211, 311.

The solution according to the invention has been presented in selected embodiments. However, these examples do not limit the invention. It is obvious that a modification can be made without changing the essence of the solution. The shown execution examples do not use up the full applicability of the solution according to the invention.

## Claims

1. A dryer or a drying machine with a closed circulation or an incompletely closed circulation of a drying medium or agent for drying wet objects or articles, comprising a drying chamber with wet articles placed therein, a fan forcing the circulation of the drying agent and a heat pump with an evaporator and a condenser having a chamber connected via a flow line with the drying chamber **characterized in that**, in the closed circulation of the drying agent or in the incompletely closed circulation there is a heat exchanger (20) with a cooling chamber (21) and a heating chamber (25) drawing thermal energy from the cooling chamber with an inlet (22) connected to an outlet (13) of a drying chamber (11) and an outlet (23) connected to a supply connection pipe (46) of a chamber (45) of the evaporator (40) of the heat pump (30), whereby an outlet connection pipe (47) of the chamber (45) of the evaporator (40) is connected to the heating chamber (25) of the heat exchanger (20) whose outlet (27) is connected to an inlet (56) of a chamber (55) of the condenser (50) of the heat pump (30).

2. The dryer according to claim 1 wherein the heat exchanger (20) is a counterflow heat exchanger with parallel or crossed, or obliquely relative to each other flow ducts of the drying agent.

3. The dryer according to claim 1 wherein the heat exchanger (120) is a counterflow heat exchanger with an intermediate chamber (128) with a rotating rotor (124) with through ducts positioned in parallel to an axis of rotation of the rotating rotor (124), transmitting the thermal energy from a stream of a hot wet drying agent flowing through the cooling chamber (121) of the heat exchanger (120) to a stream of a cool dried drying agent flowing via the heating chamber (125) of the heat exchanger (120).

4. The dryer according to claim 1 or 2 or 3 wherein the drying chamber is a rotatable drying chamber (211, 311).

5. A method of conducting or leading a drying medium or agent in a dryer or drying machine according to any one of claims 1 to 4 and suitable to dry wet objects or articles and comprising a drying chamber, a fan and a heat pump inter-connected by flow lines of the drying agent that create, together with the drying chamber, the fan forcing circulation of the drying medium and together with the heat pump comprising an evaporator with a chamber and a condenser with a chamber, a closed circulation or an incompletely closed circulation of the drying medium **characterised in that** into the closed circulation or the incompletely closed circulation a heat exchanger (20) with a cooling chamber (21) and a heating chamber 25) is placed and the drying medium from the drying chamber (11) is directed to the cooling chamber (21) of the heat exchanger (20) wherefrom, after a preliminary cooling, the drying medium is directed to the chamber (45) of the evaporator (40), and afterwards, to the heating chamber (25) of the heat exchanger (20) and, after preheating of the drying medium in the heating chamber (25) by drawing thermal energy from the cooling chamber (21), the drying medium is directed to the chamber (55) of the condenser (50) of the heat pump (30) wherefrom a dried and hot drying medium is fed to the drying chamber (11).

6. The method according to claim 5 wherein the drying medium in the heating chamber (25, 125) of the heat exchanger (20, 120) is lead or conducted in opposite direction to flow direction of the drying agent in the cooling chamber (21, 121) of the heat exchanger (20, 120).

7. The method according to claim 5 wherein the thermal energy from the cooling chamber (121) to the heating chamber (125) is transmitted via rotating rotors (124) drawing the thermal energy from the drying agent flowing through a part of the rotating rotor (124) situated temporally in the cooling chamber (121), and then, after its rotation and entering in the heating chamber (125), giving up the thermal energy to the drying medium flowing through this part of the rotating rotor (124).
